# EUROPÄISCHE PATENTANMELDUNG

(11) **EP 3 229 556 A1**
(43) Veröffentlichungstag der Anmeldung: **11.10.2017**
(21) Anmeldenummer: 17152344.2
(22) Anmeldetag: 20.01.2017
(51) Int. Cl.: H05B 33/08

(54) **GROUNDNEBENSCHLUSSMODUL SOWIE VERFAHREN ZUR AUFRECHTERHALTUNG DES NOTWENDIGEN BETRIEBSSTROMES EINES DIMMERS**

(30) Priorität: 08.04.2016 DE 102016106474
(71) Anmelder: Insta GmbH, 58509 Lüdenscheid (DE)
(72) Erfinder: Hopp, Christian, 44139 Dortmund (DE); Krause, Karl-Heinz, 58809 Neuenrade (DE); Marks, Pierre, 58543 Witten (DE)

(57) **Zusammenfassung**

Ein Nebenschlussmodul 3 dient zum Betreiben einer mit Wechselspannung gespeisten Last 1 mit einem Dimmer 2. Das Nebenschlussmodul 3 umfasst einen schaltungstechnisch ausgeführten Filter 7 zum Erfassen von sinusförmigen Spannungsverläufen der Arbeitsfrequenz. Der Filter 7 ist geschaltet, damit in den Phasen eines solchen Spannungsverlaufs von dem Nebenschlussmodul 3 nur ein kleiner Strom eingespeist wird.

Ein Verfahren zum Bereitstellen des Betriebsstromes für einen eine Last 1 steuernden, an Wechselspannung angeschlossenen Dimmer 2 wird derart ausgeführt, dass in Phasen, in denen der Leistungsschalter des Dimmers 2 durchgeschaltet ist und über der Last 1 ein sinusförmiger Spannungsverlauf S der Arbeitsfrequenz anliegt, über ein Nebenschlussmodul 3 nur ein kleiner Strom I bereitgestellt wird, während in den anderen Phasen über das Nebenschlussmodul 3 der für den weiteren Betrieb des Dimmers 2 bei geöffnetem Leistungsschalter notwendige Strom I bereitgestellt wird.

## Beschreibung

Die Erfindung betrifft ein Nebenschlussmodul zum Betreiben einer mit Wechselspannung gespeisten Last mit einem Dimmer. Ferner betrifft die Erfindung ein Verfahren zum Bereitstellen des Betriebsstromes für einen eine Last steuernden, an Wechselspannung angeschlossenen Dimmer.

Die Lichtquellen (Lampen) von Beleuchtungseinrichtungen, insbesondere, wenn sich diese in einem Gebäude befinden, werden in vielen Fällen unter Zwischenschaltung eines Dimmers angesteuert. Dieses erlaubt ein Dimmen der daran angeschlossenen Lampen. Derartige Dimmer sind an das Wechselspannungsnetz angeschlossen und typischerweise als Phasenabschnitts-Dimmer oder auch als Phasenanschnitts-Dimmer ausgeführt. Mit einem solchen Dimmer wird nur für die Dauer eines Teils einer Halbwelle der Leistungsschalter durchgeschaltet und die Lampe mit Spannung versorgt. In Abhängigkeit von der gewünschten Dimmeinstellung ist der Leistungsschalter des Dimmers über einen kürzeren oder längeren Zeitraum einer Halbwelle in der Arbeitsfrequenz durchgeschaltet. Werden an derartige Dimmer LED- oder CFLi-Lampen, insbesondere als Ersatz zuvor mit einem solchen Dimmer betriebenen Glüh- oder Halogenlampen angeschlossen, kommt es oftmals zu Flackererscheinungen. Dieses liegt darin begründet, dass die Schnittstelle zwischen einem solchen Dimmer und einer solchen Lampe nicht ausreichend abgedeckt ist. Derartige Lampen weisen ein anderes und insbesondere nicht vergleichbares Verhalten wie herkömmliche Glüh- oder Halogenlampen auf.

Um an dieser Stelle Abhilfe zu schaffen, könnte zusammen mit dem Einsatz von LED- oder anderen Energiesparlampen der als Teil der Beleuchtungseinrichtung eingesetzte Dimmer gegen einen solchen ausgetauscht werden, der zum Dimmen derartiger Lampen ausgelegt ist und demzufolge eine entsprechende Schnittstelle aufweist. Der Aufwand hierfür ist jedoch unverhältnismäßig hoch. Aus diesem Grunde sind Nebenschlussschaltungen entwickelt worden, mit denen versucht wird, derartige Flackererscheinungen zu reduzieren. Nebenschlussstromschaltungen arbeiten zeit- und/oder spannungshöhengesteuert. Über eine solche Nebenschlussstromsteuerung kann der gewünschte kontinuierliche Stromfluss in der Leitendphase des Dimmers jedoch nur angenähert werden. Eine zeitgesteuerte Nebenschlussstromsteuerung ist überdies nur dann einsetzbar, wenn im Lampenkreis eine gewisse Intelligenz vorhanden ist.

Ausgehend von diesem diskutierten Stand der Technik liegt der Erfindung daher die Aufgabe zugrunde, ein Nebenschlussmodul zum Betreiben einer mit Wechselspannung gespeisten, gedimmten Last und somit zum Betreiben des Dimmers sowie ein Verfahren zum Bereitstellen des Betriebsstromes für einen solchen Dimmer vorzuschlagen, der bzw. das zum Einen Sorge dafür trägt, dass der Dimmer auch in denjenigen Phasen der Netzspannungshalbwelle einen ausreichenden Strom erhält, in denen der Dimmer nicht leitend ist. Zum Anderen soll die Verlustleistung in der Leitendphase des Dimmers möglichst klein gehalten sein.

Gelöst wird diese Aufgabe erfindungsgemäß durch ein Nebenschlussmodul der eingangs genannten Art, bei dem das Nebenschlussmodul einen schaltungstechnisch ausgeführten Filter zum Erfassen von sinusförmigen Spannungsverläufen der Arbeitsfrequenz umfasst, welcher Filter geschaltet ist, damit in den Phasen eines solchen Spannungsverlaufs von dem Nebenschlussmodul nur ein kleiner Strom eingespeist wird.

Der verfahrensbezogene Anteil der Aufgabe wird durch ein eingangs genanntes Verfahren gelöst, bei dem in Phasen, in denen der Leistungsschalter des Dimmers durchgeschaltet ist und über der Last ein sinusförmiger Spannungsverlauf der Arbeitsfrequenz anliegt, über ein Nebenschlussmodul nur ein kleiner Strom bereitgestellt wird, während in den anderen Phasen über das Nebenschlussmodul der für den weiteren Betrieb des Dimmers bei geöffnetem Leistungsschalter notwendige Strom bereitgestellt wird.

Bei diesem Nebenschlussmodul - gleiches gilt für das beanspruchte Verfahren - wird der Spannungsverlauf der Arbeitsfrequenz über die Last beobachtet. Das Nebenschlussmodul ist zu diesem Zweck parallel zu der zu dimmenden Last, typischerweise einer LED- oder CFLi-Lampe, geschaltet. Wird ein sinusförmiger Spannungsverlauf der Arbeitsfrequenz detektiert, ist dieses ein Signal dafür, dass die Last spannungsversorgt ist. Dann braucht durch das Nebenschlussmodul nur ein sehr geringer Strom eingespeist zu werden. Detektiert werden diese Spannungsverlaufsphasen der Arbeitsfrequenz durch einen Filter als Zusatzschaltung im Nebenschlussmodul. Dabei ist das Nebenschlussmodul so ausgelegt, dass bei Detektieren eines solchen sinusförmigen Spannungsverlaufes der Arbeitsfrequenz, beispielsweise über einen Hochpassfilter, insbesondere einen solchen zweiter Ordnung, diese Phasen für die Einspeisung eines relevanten Nebenschlussstromes ausgeblendet werden, mithin in diesen Phasen nur ein sehr geringer Strom eingespeist wird. Bei einem Phasenabschnitts-Dimmer beginnt eine Halbwelle mit einem solchen sinusförmigen Spannungsverlauf der Arbeitsfrequenz. Diese Phase wird durch Öffnen des Leistungsschalters des Dimmers beendet, und zwar entsprechend der vorgegebenen Dimmstellung. Dieses führt zu einem nicht-sinusförmigen Spannungsabfall über die Last. In diesen Phasen wird durch das Nebenschlussmodul der zum weiteren Betrieb des Dimmers notwendige Strom für die Zeit des Spannungsabfalls über die Last eingespeist. Auch bei herkömmlichen Nebenschlussmodulen wird dieser Strom eingespeist. Allerdings unterscheidet sich das vorbeschriebene Konzept von vorbekannten Nebenschlussmodulen signifikant dadurch, dass in der Phase eines sinusförmigen Spannungsverlaufes der Arbeitsfrequenz nur ein minimaler Strom eingespeist wird, so dass die Verlustleistung, verursacht durch das Nebenschlussmodul in Bezug auf diese Phase einer Halbwelle auf ein notwendiges Minimum reduziert ist.

Zweckmäßig ist eine Ausgestaltung, bei der der Filter ausgelegt ist, die Arbeitsfrequenz nur im Bezug auf eine Polarität auszuwerten, vorzugsweise nur die positiven Spannungshalbwellen. Hierdurch können Speichereffekte unterdrückt werden. In einer weiteren vorzugsweisen Weiterbildung ist vorgesehen, dass nur ansteigende und sinusförmig abfallende Signale ausgewertet werden. Steiler abfallende Signale würden zur Freigabe des ansonsten vorbestimmten Nebenstromflusses führen und werden ausgeblendet, wodurch weitere Speichereffekte vermieden werden können.

Zur Verringerung von anderweitigen Störeinflüssen ist in einer Weiterbildung vorgesehen, das Nebenschlussmodul mit einem Tiefpassfilter auszustatten.

Ein solches, schaltungstechnisch mit einfachen Mitteln ausgelegtes Nebenschlussmodul kann Teil der durch den Dimmer anzusteuernden Last, also beispielsweise Teil einer Lampe sein oder zumindest eine Baueinheit mit dieser darstellen. Für die schaltungstechnische Realisierung eines solchen Nebenschlussmoduls wird nur ein kleiner Bauraum benötigt.

Möglich ist es auch, ein solches Nebenschlussmodul als Zwischenlampenfassung auszulegen, die an ihrer einen Anschlussseite einen zu einer Lampenfassung komplementären Anschluss aufweist und an ihrer anderen Anschlussseite als Lampenfassung ausgeführt ist. Ein solches Nebenschlussmodul kann in eine bestehende Lampenfassung eingesetzt werden und stellt sodann für die zu betreibende Lampe die notwendige Lampenfassung bereit.

Auf die vorbeschriebene Weise ist eine wirksame Unterdrückung eines Flackerns bei einem Einsatz von Energiesparlampen und LED-Lampen, die mit Dimmern angesteuert werden, die zum Dimmen von herkömmlichen Glüh- oder Halogenlampen verwendet werden, möglich.

Nachfolgend ist die Erfindung anhand eines Ausführungsbeispiels unter Bezugnahme auf die beigefügten Figuren beschrieben. Es zeigen:
- **Fig. 1:**: ein Blockschaltdiagramm einer mit einem Dimmer ansteuerbaren, an das Wechselspannungsnetz angeschlossenen Lampe,
- **Fig. 2:**: eine schaltungstechnische Auslegung einer Zusatzschaltung innerhalb des Nebenschlussmoduls der Figur 1 und
- **Fig. 3:**: ein Diagramm zum Darstellen des Spannungsverlaufes über der Last innerhalb von zwei aufeinanderfolgenden Halbwellen sowie des durch die Zusatzschaltung des Nebenschlussmoduls eingespeisten Stroms in einer Gegenüberstellung mit dem eingespeisten Strom mit einem herkömmlichen Nebenschlussmodul.

Eine LED-Lampe 1, bei der es sich durchaus auch um eine CFLi-Lampe handeln kann, ist netzspannungsgespeist und über einen Dimmer 2 ansteuerbar. Bei dem Dimmer 2 handelt es sich um einen Phasenabschnitts-Dimmer. Parallel zu der durch die LED-Lampe 1 bereitgestellten Last ist ein Nebenschlussmodul 3 geschaltet. Das Nebenschlussmodul 3 umfasst eine Gleichrichtung 4 und eine Stromsenke 5. Die Stromsenke 5 ist in Bezug auf die Spannungshöhe am Eingang 6 des Nebenschlussmoduls 3 einstellbar. Teil des Nebenschlussmoduls 3 ist eine auf die Stromsenke 5 einwirkende Zusatzschaltung 7. Die Zusatzschaltung 7 gibt vor, wann über die Stromsenke 5 wieviel Strom über die Last 1 eingespeist wird.

Damit der Dimmer 2 eine Spannung aufbauen kann, muss ein gewisser Strom über die Last 1 fließen. Mit der Zusatzschaltung 7 wird in denjenigen Phasen, in denen der Leistungsschalter des Dimmers 2 durchgeschaltet ist und somit über der LED-Lampe 1 Spannung anliegt, nur ein sehr geringer Strom zur Verfügung gestellt. Dieses ändert sich, sobald der Leistungsschalter des Dimmers 2 nicht mehr durchgeschaltet ist und somit keine Spannung über der LED-Lampe 1 ansteht oder diese sehr rasch abfällt. Dann wird mit durch die Zusatzschaltung 7 in dem Nebenschlussmodul 3 der benötigte Strom in die Schaltung eingespeist.

Zum Erkennen derjenigen Phase, in der eine Stromeinspeisung nur mit einem sehr kleinen Strom möglich und auch nur erforderlich ist, d.h. in denjenigen Phasen, in denen der Leistungsschalter des Dimmers 2 durchgeschaltet ist, wird über die Zusatzschaltung 7 der Spannungsverlauf der Arbeitsfrequenz beobachtet. Ausgeblendet werden mittels der Zusatzschaltung 7 im Bezug auf eine nennenswerte Stromeinspeisung diejenigen Phasen, in denen der Spannungsverlauf der Arbeitsfrequenz sinusförmig ausgelegt ist. Ein solcher Spannungsverlauf ist für eine Schaltstellung des Leistungsschalters des Dimmers 2 typisch, wenn dieser durchgeschaltet und somit die LED-Lampe 1 spannungsversorgt ist. Ist der Spannungsverlauf nicht oder nicht mehr sinusförmig, bedeutet dieses, dass der Leistungsschalter des Dimmers 2 nicht oder nicht mehr durchgeschaltet ist und sodann Strom in die Schaltungsanordnung eingespeist werden muss.

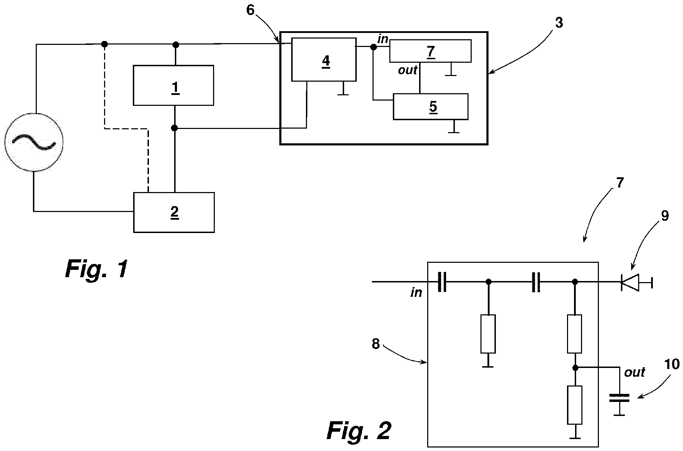

Zum Zwecke des Erkennens eines sinusförmigen Spannungsverlaufes der Arbeitsfrequenz ist die Zusatzschaltung 7 als Hochpassfilter zweiter Ordnung ausgeführt. Ein diesbezügliches Ausführungsbeispiel ist in Figur 2 gezeigt. Der Hochpassfilteranteil ist in der Schaltungsdarstellung der Figur 2 mit dem Bezugszeichen 8 gekennzeichnet. Eine an den Hochpassfilterschaltungsteil 8 angeschlossene Diode 9 dient zur Unterdrückung von nicht sinusförmig abfallenden Spannungen. Bei der Zusatzschaltung 7 ist vorgesehen, nur eine Polarität in der Arbeitsfrequenz zu berücksichtigen, um Speichereffekte zu unterdrücken. Bei dem dargestellten Ausführungsbeispiel werden nur die positiven Halbwellen berücksichtigt.

Zur Reduzierung einer Störempfindlichkeit ist an den Hochpassfilterschaltteil 8 der Zusatzschaltung 7 zusätzlich ein Tiefpassfilter 10 angeschlossen.

Die Zusatzschaltung bewirkt somit, dass beim Erkennen eines sinusförmigen Spannungsverlaufes über die LED-Lampe 1 nur ein sehr geringer Strom zur Verfügung gestellt wird.

Dieses Nebenschlussmodul 3 eignet sich ebenfalls dazu, im Aus-Zustand des Dimmers für ausreichend Stromfluss zu sorgen, damit der Dimmer seinen im Aus-Zustand benötigten Strom aufnehmen kann, ohne dass es zu sichtbarem Licht durch die Lampen kommt.

Die vorstehenden Ausführungen gelten für das Nebenschlussmodul 3 bzw. die in Figur 1 gezeigte Schaltungsanordnung, bei der der Dimmer 2 über die Last 1 geschaltet ist. Die vorstehenden Ausführungen gelten gleichermaßen für eine Schaltungsanordnung, bei der der Dimmer auch über einen direkten Anschluss an den Neutralleiter der Netzspannung angeschlossen ist, wie dieses in Figur 1 durch die gestrichelte elektrische Verbindung gezeigt ist.

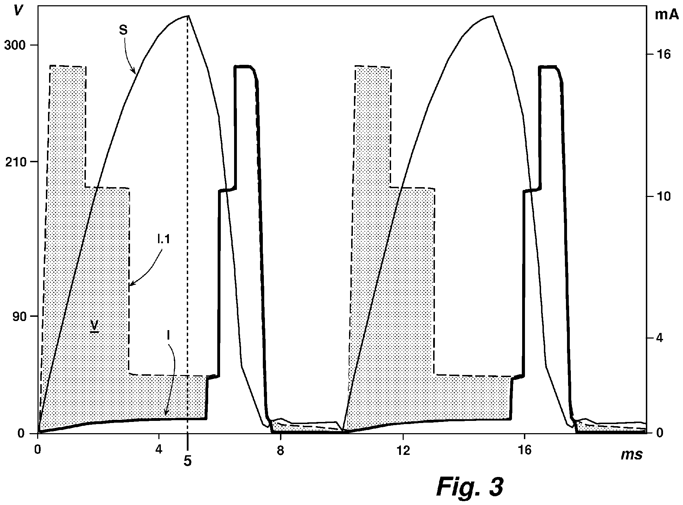

Figur 3 zeigt in einem Zeitverlaufsdiagramm beispielhaft den Spannungsverlauf S über die LED-Lampe 1 in zwei aufeinanderfolgenden Halbwellen. Bei dem dargestellten Ausführungsbeispiel ist der Phasenabschnitt mit 5 ms eingestellt. Wie aus dem Diagramm der Figur 3 erkennbar, ist der Spannungsverlauf S in dem Zeitintervall 0 ms bis 5 ms sinusförmig. Durch die Zusatzschaltung 7 wird dieses erkannt und in Bezug auf eine Stromeinspeisung ausgeblendet mit der Folge, dass über das Nebenschlussmodul 3 nur ein sehr geringer Strom I eingespeist wird. Bei dem dargestellten Ausführungsbeispiel beträgt dieser in dieser Phase nur etwa 0,5 mA. Sind 5 ms abgelaufen, wirkt die Phasenabschnitts-Dimmung mit der Folge, dass die Spannung quasi schlagartig abfällt. Dass diese nicht sprunghaft abfällt, liegt an dem Verhalten der LED-Lampe 1 auf den spontanen Spannungsabfall. In jedem Fall ist bei dann geöffnetem Leistungsschalter des Dimmers 2 der Spannungsverlauf S nicht mehr sinusförmig. Dieser nicht mehr sinusförmige Spannungsverlauf S führt dazu, dass kein Hochpasssignal mehr bereitgestellt wird und somit der über die einstellbare Stromsenke 5 vorgesehene Strom I in die Schaltung eingespeist wird. Dieses erfolgt in Stufen. Die Breite und die Höhen der in Figur 3 erkennbaren Stufen sind abhängig von dem eingesetzten Dimmer 2 und der LED-Lampe 1.

Dieses Stromeinspeisen bei geöffnetem Leistungsschalter des Dimmers 2 erfolgt gemäß herkömmlichen Kriterien und stellt sich ebenfalls bei vorbekannten Nebenschlussmodulen in dieser Form dar. Zum Vergleich ist in Figur 3 die Stromeinspeisung eines herkömmlichen Nebenschlussmoduls eingetragen. Diese Stromeinspeisung verhält sich bereits zu Beginn jeder Halbwelle analog zu der Stromeinspeisung bei abfallender Spannung. Dies hat zur Folge, dass im Zeitpunkt 0 ms ein hoher Strom I.1 zur Verfügung gestellt wird, der sukzessive bis zum Phasenabschnitt 5 ms in Stufen abgebaut wird. Tatsächlich wird in dem Zeitraum 0 ms bis 5 ms jedoch nur ein sehr geringer Strom benötigt, was sich der Gegenstand dieser Erfindung zunutze macht. Aus dieser Gegenüberstellung wird die sehr viel höhere Verlustleistung V herkömmlicher Nebenschlussmodule gegenüber dem erfindungsgemäßen Nebenschlussmodul deutlich. Der Unterschied in der Verlustleistung V ist in Figur 3 mit einer Rasterung kenntlich gemacht.

Die Erfindung ist anhand eines Ausführungsbeispiels unter Bezugnahme auf die Figuren beschrieben worden. Ohne den Umfang der geltenden Ansprüche zu verlassen, ergeben sich für einen Fachmann zahlreiche weitere Ausgestaltungen, die Erfindung umsetzen zu können.

### Bezugszeichenliste

- 1: LED-Lampe
- 2: Dimmer
- 3: Nebenschlussmodul
- 4: Gleichrichtung
- 5: Stromsenke
- 6: Eingang
- 7: Zusatzschaltung
- 8: Hochpassfilterschaltungsteil
- 9: Diode
- 10: Tiefpassfilter
- I, I.1: Strom
- S: Spannungsverlauf
- V: Verlustleistung

## Patentansprüche

1. Nebenschlussmodul zum Betreiben einer mit Wechselspannung gespeisten Last (1) mit einem Dimmer (2), **dadurch gekennzeichnet, dass** das Nebenschlussmodul (3) einen schaltungstechnisch ausgeführten Filter (7) zum Erfassen von sinusförmigen Spannungsverläufen der Arbeitsfrequenz umfasst, welcher Filter (7) geschaltet ist, damit in den Phasen eines solchen Spannungsverlaufs (S) von dem Nebenschlussmodul (3) nur ein kleiner Strom (I) eingespeist wird.

2. Nebenschlussmodul nach Anspruch 1, **dadurch gekennzeichnet, dass** der Filter (7) als Hochpassfilter ausgelegt ist.

3. Nebenschlussmodul nach Anspruch 2, **dadurch gekennzeichnet, dass** der Hochpassfilter als Hochpassfilter zweiter Ordnung ausgelegt ist.

4. Nebenschlussmodul nach einem der Ansprüche 1 bis 3, **dadurch gekennzeichnet, dass** das Nebenschlussmodul (3) zur Reduzierung einer Störempfindlichkeit über ein Tiefpassfilter (10) verfügt.

5. Nebenschlussmodul nach einem der Ansprüche 1 bis 4, **dadurch gekennzeichnet, dass** das Nebenschlussmodul Teil einer Lichtquelle als Last oder eine Baueinheit mit dieser bildet.

6. Nebenschlussmodul nach einem der Ansprüche 1 bis 4, **dadurch gekennzeichnet, dass** das Nebenschlussmodul als Zwischenstück zum Kontaktieren einer Lichtquelle als Last ausgeführt ist und an seiner einen Anschlussseite einen zu einer Lampenfassung komplementären Anschluss und an seiner anderen Anschlussseite als Lampenfassung ausgeführt ist.

7. Verfahren zum Bereitstellen des Betriebsstromes für einen eine Last (1) steuernden, an Wechselspannung angeschlossenen Dimmer (2), **dadurch gekennzeichnet, dass** in Phasen, in denen der Leistungsschalter des Dimmers (2) durchgeschaltet ist und über der Last (1) ein sinusförmiger Spannungsverlauf (S) der Arbeitsfrequenz anliegt, über ein Nebenschlussmodul (3) nur ein kleiner Strom (I) bereitgestellt wird, während in den anderen Phasen über das Nebenschlussmodul (3) der für den weiteren Betrieb des Dimmers (2) bei geöffnetem Leistungsschalter notwendige Strom (I) bereitgestellt wird.

8. Verfahren nach Anspruch 7, **dadurch gekennzeichnet, dass** zum Detektieren der Phasen eines sinusförmigen Spannungsverlaufes der Arbeitsfrequenz diese hochpassgefiltert wird.

9. Verfahren nach Anspruch 8, **dadurch gekennzeichnet, dass** die Hochpassfilterung in der zweiten Ordnung durchgeführt wird.

10. Verfahren nach einem der Ansprüche 7 bis 9, **dadurch gekennzeichnet, dass** zur Reduzierung von Störeinflüssen die Arbeitsfrequenz tiefpassgefiltert wird.
